# EUROPÄISCHE PATENTSCHRIFT

(11) **EP 1 426 229 B1**
(45) Veröffentlichungstag und Bekanntmachung des Hinweises auf die Patenterteilung: **05.03.2008**
(21) Anmeldenummer: 03011324.5
(22) Anmeldetag: 19.05.2003
(51) Int. Cl.: B60K 31/00

(54) **Verfahren und Vorrichtung zur Steuerung einer Brennkraftmaschine**
An apparatus and a method for controlling an engine
Appareil et procédé de commande d'un moteur à combustion

(30) Priorität: 07.12.2002 DE 10257274
(43) Veröffentlichungstag der Anmeldung: 09.06.2004
(73) Patentinhaber: ROBERT BOSCH GMBH, 70442 Stuttgart (DE)
(72) Erfinder: Hellmann, Manfred, 71706 Hardthof (DE); Erhart, Robert, 71254 Ditzingen (DE); Winner, Hermann, 76467 Bietigheim (DE)

(56) Entgegenhaltungen:
- EP-A- 0 323 070
- EP-A- 1 217 242
- WO-A-02/49870
- DE-A1- 10 033 647
- DE-A1- 19 916 655
- US-A- 5 184 301
- US-A- 5 947 863

## Beschreibung

Die vorliegende Erfindung betrifft ein Verfahren und eine Vorrichtung zur Steuerung einer Brennkraftmaschine eines Fahrzeugs, das mit einem Geschwindigkeitsregler sowie einem manuellen Schaltgetriebe ausgestattet ist, in dem bei Erkennen einer Unterbrechung des Kraftflusses zwischen der Antriebseinheit des Fahrzeugs und den Antriebsrädern das Motorsteuergerät der Brennkraftmaschine das Motorausgangsmoment reduziert, bevor eine Drehzahlregelung des Geschwindigkeitsreglers die Motordrehl auf eine Solldrehzahl regelt.

### Stand der Technik

Aus der DE 198 33 838 A1 ist ein Verfahren und eine Vorrichtung zur Steuerung der Geschwindigkeit eines Fahrzeugs bekannt, wobei diese Steuerung im Rahmen einer Regelung eines Istwertes auf einen Sollwert vorgenommen wird. Bei Unterbrechen des Kraftflusses zwischen Antriebseinheit und Antriebsrädern wird der Regler wirkungslos geschaltet. Bei Wiederherstellen des Kraftflusses wird die Regelung automatisch wieder wirksam geschaltet. Dabei kann es vorkommen, dass in dem Moment, in dem durch eine Kupplungsöffnung die Antriebseinheit schlagartig von der Last befreit wird, eine Drehzahlüberhöhung der Antriebseinheit eintritt, bis die Drehzahlregelung, die die Drehzahl der Antriebseinheit während der Kupplungsbetätigung absenkt, wirksam wird.

Aus der EP 1217 242 ist eine Vorrichtung nach dem Oberbegriff des Anspruchs 5 bekannt, bei in einem Kraftfahrzeug ein Kupplungssensor vorgesehen ist, der bei Öffnen der Kupplung ein Kupplungssignal erzeugt, das der Motorsteuerung zugeführt wird, wobei die Kraftstoffeinspritzung derart beeinflusst wird, dass ein Hochdrehen des Motors infolge der Lastabkopplung durch Öffnen der Kupplung vermieden wird.

Aus der DE 100 33 647 A1 ist ein System zur Steuerung eines mit hydraulisch betätigten Reibungskupplungen versehenen Automatikgetriebes in Verbindung mit einem Antriebsmotor bekannt. Um bei mangelhaftem Öldruckaufbau im Hydrauliksystem des Automatikgetriebes ein Durchrutschen der jeweils aktivierten Reibungskupplungen zu vermeiden, wird bei erkanntem Rutschen das Antriebsdrehmoment des Antriebsmotors stufenweise reduziert, bis kein Rutschen mehr auftritt. Nach Ablauf einer vorgegebenen Zeit wird das Antriebsdrehmoment wieder auf die Sollhöhe angehoben. Eine Fehleranzeige erfolgt erst dann, wenn eine vorgegebene Anzahl von Einzelfehlern durch einen Zähler erfasst sind, wodurch ein übermäßiger Verschleiß an den Reibungskupplungen des Durchrutschens vermieden wird.

Aus der DE 199 16 655 A1 ist ein Verfahren und eine Vorrichtung zur Steuerung der Antriebseinheit eines Fahrzeugs bekannt, wobei das Drehmoment im Sinne einer Verminderung von Drehzahlschwingung beeinflusst wird. Die Beeinflussung des Drehmoments wird während eines Schaltvorgangs gestoppt. Die Beeinflussung wird wieder aufgenommen, nachdem ein Extremum im Drehzahlverlauf erkannt wurde.

Aus der WO 02/49870 ist eine Antriebseinrichtung für ein Kraftfahrzeug bekannt, die aus einer Brennkraftmaschine, einer Kupplung und einem Kupplungspedal sowie aus einem Getriebe und einer elektronischen Steuerung besteht. Ein erster Sensor signalisiert der Steuereinrichtung ob die Kupplung gedrückt ist oder nicht und ein zweiter Sensor am Getriebe signalisiert, ob ein höherer Gang eingelegt wird. Die Steuereinrichtung bewirkt, dass das Motordrehmoment auf ein Niveau unterhalb der maximalen Drehmoments begrenzt wird, wenn der erste Sensor erkennt, dass die Kupplung betätigt ist und gleichzeitig der zweite Sensor erkennt, dass ein Gang höher als der vorbestimmte Gang ausgewählt wird.

### Kern und Vorteile der Erfindung

Der Kern der vorliegenden Erfindung ist es, die Nachteile des Standes der Technik zu überwinden. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise wird das Motormoment auf einen Wert begrenzt, der größer als das momentane Motorreibmoment ist.

Besonders vorteilhaft ist, dass das Motormoment auf einen Wert begrenzt wird, der der Summe aus dem momentanen Motorreibmoment und einem Reservemoment besteht, wobei das Reservemoment so dimensioniert ist, dass für die einsetzende Drehzahlregelung keine Beeinträchtigung entsteht.

Weiterhin ist es vorteilhaft, dass die Solldrehzahl des Geschwindigkeitsreglers auf Grundlage der momentanen Fahrzeuggeschwindigkeit und der Übersetzung des wahrscheinlichsten neuen Ganges bestimmbar ist.

Weiterhin ist es vorteilhaft, dass die Drehzahlregelung des Geschwindigkeitsreglers ein einzuregelndes Sollmoment an das Motorsteuergerät übermittelt.

Weiterhin ist es vorteilhaft, dass das Motorsteuergerät bei Erkennen einer Unterbrechung des Kraftflusses zwischen der Antriebseinheit des Fahrzeugs und den Antriebsrädern das Ausgangsmoment der Brennkraftmaschine reduziert, bevor dem Motorsteuergerät von einer Drehzahlregelung eines Geschwindigkeitsreglers ein einzuregelndes Sollmoment zugeführt wird.

Weiterhin ist es vorteilhaft, dass das Motormoment auf einen Wert begrenzbar ist, der größer als das momentane Motorreibmoment ist. Hierbei ist es vorteilhaft, dass das begrenzte Motormoment auf einen Wert begrenzt wird, der der Summe aus dem momentanen Motorreibmoment und einer Momentenreserve zur Drehzahlregelung des Geschwindigkeitsreglers entspricht. Diese liegt üblicherweise leicht oberhalb des Motorreibmomentes.

Vorteilhafterweise ist die Solldrehzahl des Geschwindigkeitsreglers auf Grundlage der momentanen Fahrzeuggeschwindigkeit und der Übersetzung des wahrscheinlichen neuen Ganges bestimmbar.

Von besonderer Bedeutung ist die Realisierung des erfindungsgemäßen Verfahrens in der Form eines Steuerelements, das für ein Steuergerät einer Brennkraftmaschine eines Kraftfahrzeugs vorgesehen ist. Dabei ist auf dem Steuerelement ein Programm gespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert.

Es zeigen
- Figur 1: ein Blockschaltbild einer Ausführungsform der erfindungsgemäßen Vorrichtung und
- Figur 2: ein Zeitdiagramm zur Erläuterung des erfindungsgemäßen Verfahrens.

### Beschreibung von Ausführungsbeispielen

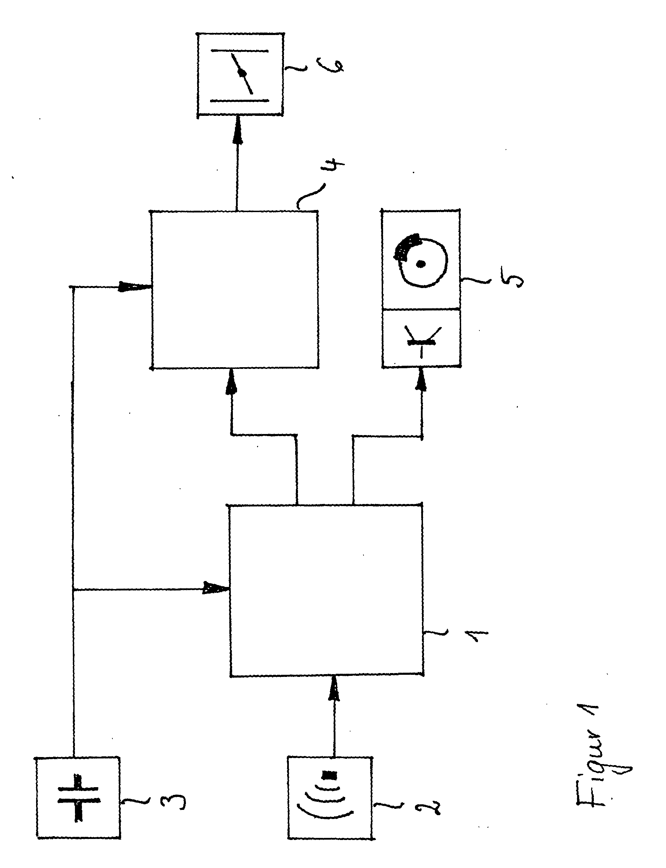

In Figur 1 ist ein Blockdiagramm einer Ausführungsform der erfindungsgemäßen Vorrichtung dargestellt. Zu erkennen ist der Geschwindigkeitsregler 1, der wahlweise auch als Abstands- und Geschwindigkeitsregler ausgeführt sein kann, der eine Geschwindigkeitsregelung im Sinne einer Konstantabstandsregelung oder einer Geschwindigkeitskonstantregelung vornimmt, je nachdem, ob mittels eines Objektdetektionssystems ein vorausfahrendes Fahrzeug erkannt wurde, oder kein vorausfahrendes Fahrzeug erkannt wurde. In dem dargestellten Beispiel erhält der Geschwindigkeitsregler 1 Eingangssignale von einem Objektdetektionssystem 2, das wahlweise als Radar-, Lidar-, Ultraschall- oder videobasierendes Objektdetektionssystem ausgeführt sein kann. Das Objektdetektionssystem 2 stellt dem Geschwindigkeitsregler 1 als Eingangssignale Werte zur Verfügung, die die Relativgeschwindigkeit, den Abstand sowie den Objektdetektionswinkel repräsentieren. Aus diesen Eingangsdaten bestimmt der Geschwindigkeitsregler 1 das relevante Zielobjekt, in dessen Abhängigkeit die Fahrzeugbeschleunigung im Sinne einer Konstantabstandsregelung gesteuert wird. Üblicherweise wird hierzu das Fahrzeug ausgewählt, das auf der gleichen Fahrspur vor dem ausgerüsteten Fahrzeug vorherfährt. Der Geschwindigkeitsregler 1 berechnet in dieser Abhängigkeit ein Beschleunigungssignal sowie ein Verzögerungssignal, wobei das Beschleunigungssignal beispielsweise in Form einer Beschleunigungsanforderung oder einer Momentenanforderung an ein Motorsteuergerät 4 ausgegeben wird und das Verzögerungssignal beispielsweise in Form einer Verzögerungsanforderung oder einer Bremsmomentenanforderung an die Verzögerungseinrichtungen 5 des Fahrzeugs ausgegeben werden. Die Verzögerungseinrichtungen 5 des Fahrzeugs verfügen über eine Bremsenansteuereinrichtungen, die aus dem Verzögerungsanforderungssignal, beispielsweise einen Bremsdruck oder eine Bremskraft berechnen und diesen Bremsdruck oder die Bremskraft an die Bremsen des Fahrzeugs ausgeben. Das Motorsteuergerät 4 bestimmt aus der Momenten- bzw. Beschleunigungsanforderung des Geschwindigkeitsreglers 1 die einzuregelnden Betriebsparameter einer Antriebseinrichtung, die vorteilhafterweise eine Brennkraftmaschine ist. Das Motorsteuergerät 4 beeinflusst hierbei insbesondere ein leistungsbestimmendes Stellelement 6 der Bremskraftmaschine, das beispielsweise eine elektronisch ansteuerbare Drosselklappe sein kann, oder aber eine Kraftstoffzumesseinrichtung in Form eines Kraftstoff-Injektors oder einer Regelstange sein kann. Weiterhin ist ein Kupplungssensor 3 vorgesehen, der erkennen kann, ob die Kupplung des Antriebsstrangs des Fahrzeugs infolge einer Betätigung der Kupplung geöffnet, geschlossen oder teilweise geschlossen ist. Dieses Kupplungssignal, das der Kupplungssensor 3 als Ausgangssignal zur Verfügung stellt, wird sowohl dem Geschwindigkeitsregler 1, als auch dem Motorsteuergerät 4 zugeführt. Wird bei aktivem Geschwindigkeitsregler 1 durch den Kupplungssensor 3 erkannt, dass die Kupplung des Fahrzeugs betätigt wird und der Kraftfluss zwischen der Antriebseinrichtung und den Antriebsrädern des Fahrzeugs unterbrochen wird, so bleibt der Geschwindigkeitsregler 1 aktiv, jedoch werden durch den Geschwindigkeitsregler 1 keine Momenten- oder Beschleunigungsanforderungen an das Motorsteuergerät 4 ausgegeben, da infolge einer Unterbrechung des Antriebsstranges durch die Kupplung diese nicht in Beschleunigung umgesetzt werden kann. Stattdessen wird im Geschwindigkeitsregler 1 eine Drehzahlregelung aktiviert, die dem Motorsteuergerät 4 mitteilt, auf welche Drehzahl die nicht belastete Antriebseinrichtung geregelt werden soll. Wird die Kupplung sehr schnell betätigt, so dass die Antriebseinrichtung des Fahrzeugs schlagartig von der Last befreit wird, so kann es infolge der Verarbeitungszeit, die vergeht, bis die Drehzahlregelung des Geschwindigkeitsreglers 1 durch das Motorsteuergerät 4 umgesetzt werden kann, zu Drehzahlüberhöhungen der Antriebseinrichtungen, insbesondere bei Brennkraftmaschinen, kommen. Derartige Drehzahlüberhöhungen registriert der Fahrer durch ein Aufheulen des Motor, wodurch der Fahrer irritiert werden kann. Um diese Komforteinbuße zu vermeiden, wird das Ausgangssignal des Kupplungssensors 3 auch dem Motorsteuergerät 4 zugeführt. Erkennt das Motorsteuergerät 4, dass die Kupplung betätigt wird, so reduziert das Motorsteuergerät das innere Motormoment so weit, dass lediglich das Motorreibmoment sowie eine Momentenreserve für die zu erwartende Drehzahlregelung erreicht wird. Sobald das Motorsteuergerät vom Geschwindigkeitsregler 1 das Signal zur Drehzahlregelung infolge der Kupplungsbetätigung erhält, wird die Momentenreduktion, die infolge der Kupplungsöffnung vorgenommen wurde, auf einen Wert korrigiert, der dem einzuregelnden Momentensignal des Geschwindigkeitsreglers 1 infolge der Drehzahlregelung entspricht. Durch das schnelle Eingreifen des Motorsteuergerätes 4 bei Öffnen der Kupplung wird die als unkomfortabel wahrzunehmende Drehzahlüberhöhung der Antriebseinrichtung, insbesondere bei Brennkraftmaschinen, verhindert.

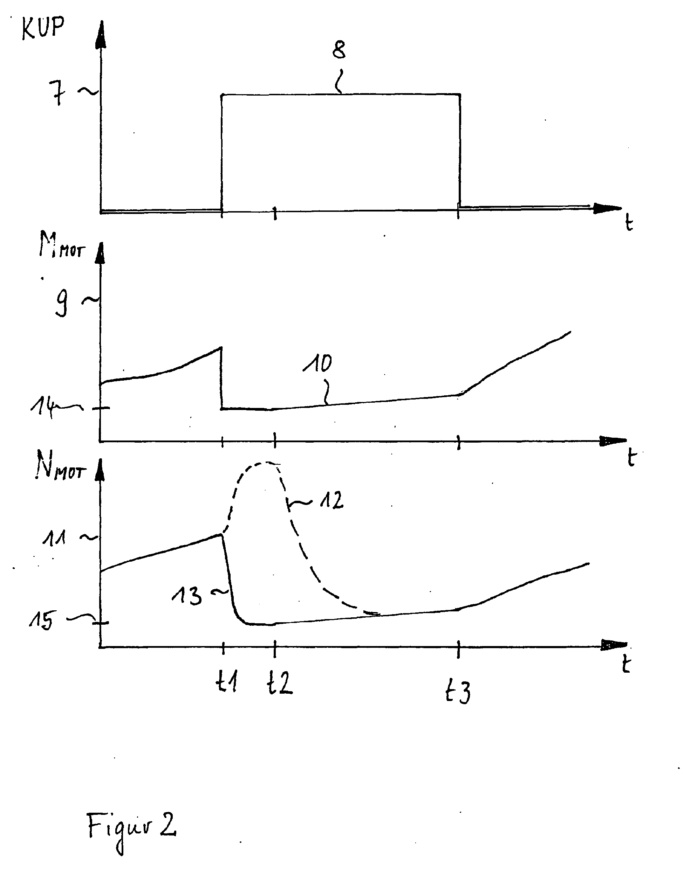

In Figur 2 ist ein Diagramm dargestellt, das das erfindungsgemäße Verfahren erläutert. Im obersten Teildiagramm 7 ist die Betätigung der Kupplung über der Zeitachse t aufgetragen. Zu Zeitpunkten t < t1 ist die Kupplung kraftschlüssig geschlossen und es wird das Motorausgangsmoment auf die Antriebsräder des Fahrzeugs übertragen. Dementsprechend ist im Diagramm 9 das innere Motormoment sowie in Diagramm 11 die Drehzahl des Motors dargestellt. Diese Werte entsprechen einer Beschleunigungs- oder Momentenanforderung, die der Geschwindigkeitsregler 1 beispielsweise aufgrund vorherfahrender, erkannter Fahrzeuge sowie der eigenen Geschwindigkeit berechnet hat. Zum Zeitpunkt t = t1 wird der Kraftfluss der Kupplung unterbrochen, wodurch keine Kraftübertragung zwischen der Antriebseinrichtung und den Antriebsrädern des Fahrzeugs stattfinden kann. Zu diesem Zeitpunkt erhält sowohl der Geschwindigkeitsregler 1 als auch das Motorsteuergerät 4 das Ausgangssignal des Kupplungssensors 3, wodurch das Motorsteuergerät 4 augenblicklich das innere Motormoment auf einen Momentenwert 14 absenkt, der dem inneren Motorreibmoment sowie einer Momentenreserve entspricht. Hierdurch fällt auch gemäß Diagramm 11, in dem die Motordrehzahl dargestellt ist, die Drehzahl gemäß Kurve 13 auf einen Leerlaufdrehzahlwert 15 ab. In Diagramm 11 ist weiterhin eine gestrichelte Kurve 12 aufgetragen, die die Drehzahl für den Fall darstellt, dass das Motorsteuergerät 4 nicht das innere Motormoment reduzieren würde, sondern nur durch die Drehzahlregelung des Geschwindigkeitsreglers 1 reagieren würde. Durch den zeitlichen Verzug zwischen der Kupplungsöffnung und dem Eingang des Momentenregelsignals des Geschwindigkeitsreglers 1 in der Motorsteuerung 4 käme es zu einer Überhöhung der Drehzahl, die erst bei einer Umsetzung der Drehzahlregelung des Geschwindigkeitsreglers 1 durch die Motorsteuerung 4 abgesenkt werden würde. Zum Zeitpunkt t = t2 wird das Momentenregelsignal des Geschwindigkeitsreglers 1 in der Motorsteuerung 4 umgesetzt und die Momentenreduktion infolge der Kupplungsöffnung auf den Wert 14 (Motorreibmoment + Momentenreserve), korrigiert. Dementsprechend steigt nach dem Zeitpunkt t = t2 sowohl die Drehzahl der Antriebseinrichtung gemäß Kurve 13 auf einen Wert an, der aufgrund der momentanen Fahrzeuggeschwindigkeit und der Getriebeübersetzung des zu erwartenden neuen Ganges berechnet werden kann. Hierdurch wird ein sanftes Einkuppeln ohne Momentenruck erreicht. Gleichzeitig steigt mit der Erhöhung der Drehzahl gemäß Kurve 13 zwischen t = t2 und t = t3 ebenfalls das Motormoment gemäß Kurve 10 leicht an. Zum Zeitpunkt t = t3 ist der Schaltvorgang des Getriebes beendet und die Kupplung wird wieder geschlossen, so dass eine Kraftübertragung zwischen der Antriebseinrichtung und den Antriebsrädern des Fahrzeugs stattfinden kann. Nach Schließen der Kupplung zum Zeitpunkt t = t3 nimmt der Geschwindigkeitsregler 1, beispielsweise auf Grundlage der Eingangswertes des Objektdetektionssystems 2, den Geschwindigkeitsregelbetrieb wieder auf, was beispielsweise in einer Erhöhung des Motorausgangsmoments und einer Erhöhung der Motordrehzahl resultieren kann. Obwohl der Geschwindigkeitsregler 1 während dem Schaltvorgang keine Momenten- bzw. Beschleunigungsanforderung ausgibt, bleibt die Geschwindigkeitsregelung aktiv und kann auch zu jedem Zeitpunkt die Verzögerungseinrichtungen 5 des Fahrzeugs aktivieren, falls dieses durch erkannte, vorherfahrende Objekte, die beispielsweise abbremsen, notwendig wird. Das erfindungsgemäße Verfahren sowie die erfindungsgemäße Vorrichtung ist auf alle Arten von Schaltgetrieben anwendbar, egal, ob es sich im Einzelnen um ein automatisiertes Schaltgetriebe oder um ein manuell betätigtes, herkömmliches Schaltgetriebe handelt.

## Patentansprüche

1. Verfahren zur Steuerung einer Brennkraftmaschine eines Fahrzeugs, das mit einem Geschwindigkeitsregler (1) sowie einem manuellen Schaltgetriebe ausgestattet ist, wobei eine Unterbrechung des Kraftflusses zwischen der Antriebseinheit des Fahrzeugs und den Antriebsrädern mittels eines Kupplungssensors (3) erkannt wird und ein Kupplungssensorsignal dem Geschwindigkeitsregler (1) zugeführt wird, der einem Motorsteuergerät (4) eine Drehzahlregelung während der Kraftschlussunterbrechung vorgibt, **dadurch gekennzeichnet, dass** das Kupplungssensorsignal zusätzlich dem Motorsteuergerät (4) zugeführt wird, das das Motormoment reduziert bis die Drehzahlregelung der Brennkraftmaschine durch den Geschwindigkeitsregler (1) wirksam wird.

2. Verfahren nach Anspruch 1, **dadurch gekennzeichnet, dass** das Motormoment durch das Motorsteuergerät (4) auf einen Wert begrenzt wird, der größer als das momentane Motorreibmoment ist.

3. Verfahren nach einem der vorhergehenden Ansprüche, **dadurch gekennzeichnet, dass** die Solldrehzahl des Geschwindigkeitsreglers (1) auf Grundlage der momentanen Fahrzeuggeschwindigkeit und der Übersetzung des wahrscheinlichsten neuen Ganges bestimmt wird.

4. Verfahren nach einem der vorhergehenden Ansprüche, **dadurch gekennzeichnet, dass** die Drehzahlregelung des Geschwindigkeitsreglers (1) ein einzuregelndes Motorsollmoment an das Motorsteuergerät (4) übermittelt.

5. Vorrichtung zur Steuerung einer Brennkraftmaschine eines Fahrzeugs, die einen Geschwindigkeitsregler (1) und ein Motorsteuergerät (4) zur Steuerung des Motorausgangsmoments bzw. der Motordrehzahl aufweist, **dadurch gekennzeichnet, dass** ein Kupplungssensor (3) vorgesehen ist, der eine Unterbrechung des Kraftflusses erkennt und bei Erkennen einer Unterbrechung des Kraftflusses zwischen der Antriebseinheit des Fahrzeugs und den Antriebsrädern ein Kupplungssensorsignal an das Motorsteuergerät (4) und an den Geschwindigkeitsregler übermittelt wodurch das Motorausgangsmoments durch das Motorsteuergerät (4) reduziert wird bis die Drehzahlregelung der Brennkraftmaschine durch den Geschwindigkeitsregler (1) wirksam wird.

6. Vorrichtung nach Anspruch 5, **dadurch gekennzeichnet, dass** das Motormoment auf einen Wert begrenzbar ist, der größer als das momentane Motorreibmoment ist.

7. Vorrichtung nach einem der Ansprüche 5 oder 6 , **dadurch gekennzeichnet, dass** die Solldrehzahl des Geschwindigkeitsreglers auf Grundlage der momentanen Fahrzeuggeschwindigkeit und der Übersetzung des neuen Ganges bestimmbar ist.

## Claims

1. Method for controlling an internal combustion engine of a vehicle which is equipped with a speed controller (1) and a manual change speed gearbox, wherein an interruption in the force flow between the drive unit of the vehicle and the driven wheels is detected by means of a clutch sensor (3), and a clutch sensor signal is fed to the speed controller (1) which presets a rotational speed control for an engine control unit (4) during the interruption in the force flow, **characterized in that** the clutch sensor signal is additionally fed to the engine control unit (4) which reduces the engine torque until the rotational speed control of the internal combustion engine by the speed controller (1) becomes effective.

2. Method according to Claim 1, **characterized in that** the engine torque is limited by the engine control unit (4) to a value which is higher than the instantaneous engine friction torque.

3. Method according to one of the preceding claims, **characterized in that** the setpoint rotational speed of the speed controller (1) is determined on the basis of the instantaneous vehicle speed and the transmission ratio of the most probable new gear speed.

4. Method according to one of the preceding claims, **characterized in that** the rotational speed control of the speed controller (1) transmits to the engine control unit (4) an engine setpoint torque which is to be applied.

5. Device for controlling an internal combustion engine of a vehicle which has a speed controller (1) and an engine control unit (4) for controlling the engine output torque and/or the engine rotational speed, **characterized in that** a clutch sensor (3) is provided which detects an interruption in the force flow and when an interruption in the force flow between the drive unit of the vehicle and the driven wheels is detected, it transmits a clutch sensor signal to the engine control unit (4) and to the speed controller, as a result of which the engine output torque is reduced by the engine control unit (4) until the rotational speed control of the internal combustion engine by the speed controller (1) becomes effective.

6. Device according to Claim 5, **characterized in that** the engine torque can be limited to a value which is higher than the instantaneous engine friction torque.

7. Device according to one of Claims 5 or 6, **characterized in that** the setpoint rotational speed of the speed controller can be determined on the basis of the instantaneous vehicle speed and the transmission ratio of the new gear speed.

## Revendications

1. Procédé de commande d'un moteur à combustion interne d'un véhicule automobile équipé d'un régulateur de vitesse (1) et d'une boîte de vitesses manuelle, selon lequel on détecte une interruption du flux des forces entre l'unité d'entraînement du véhicule et les rues motrices, à l'aide d'un capteur d'embrayage (3) et on applique un signal de capteur d'embrayage au régulateur de vitesse (1) qui prédéfinit pour un appareil de commande de moteur (4), une régulation de vitesse de rotation pendant la coupure du flux des forces,
**caractérisé en ce que**
le signal du capteur d'embrayage est en plus fourni à l'appareil de commande de moteur (4) qui réduit le couple moteur jusqu'à ce que la régulation de vitesse du moteur à combustion interne soit activée par le régulateur de vitesse (1).

2. Procédé selon la revendication 1,
**caractérisé en ce qu'**
on limite le couple moteur par l'appareil de commande de moteur (4) à une valeur supérieure au couple de friction, instantané, du moteur.

3. Procédé selon l'une des revendications précédentes,
**caractérisé en ce qu'**
on définit la vitesse de rotation de consigne du régulateur de vitesse (1) sur le fondement de la vitesse instantanée du véhicule et de la démultiplication du nouveau rapport de vitesses le plus probable.

4. Procédé selon l'une des revendications précédentes,
**caractérisé en ce que**
la régulation de vitesse de rotation du régulateur de vitesse (1) transmet un couple moteur de consigne à réguler à l'appareil de commande de moteur (4).

5. Dispositif de commande d'un moteur à combustion interne de véhicule comportant un régulateur de vitesse (1) et un appareil de commande de moteur (4) pour commander le couple de sortie du moteur ou sa vitesse de rotation,
**caractérisé par**
un capteur d'embrayage (3) qui reconnaît une coupure du flux des forces et, en cas de détection d'une coupure du flux des forces entre l'unité d'entraînement du véhicule et les roues motrices, un signal de capteur d'embrayage est transmis à l'appareil de commande de moteur (4) et au régulateur de vitesse, l'appareil de commande de moteur (4) réduisant le couple de sortie du moteur jusqu'à ce que la régulation de vitesse du moteur à combustion interne soit activée par le régulateur de vitesse (1).

6. Dispositif selon la revendication 5,
**caractérisé en ce que**
le couple moteur est limité à une valeur supérieure au couple de friction instantané du moteur.

7. Dispositif selon l'une des revendications 5 ou 6,
**caractérisé en ce que**
la vitesse de rotation de consigne du régulateur de vitesse se défini sur le fondement de la vitesse instantanée du véhicule et de la démultiplication du nouveau rapport de vitesse.
